# EUROPEAN PATENT SPECIFICATION

(11) **EP 3 719 653 B1**
(45) Date of publication and mention of the grant of the patent: **09.03.2022**
(21) Application number: 20167820.8
(22) Date of filing: 02.04.2020
(51) Int. Cl.: G06F 11/36

(54) **METHOD AND SYSTEM FOR TESTING SOURCE CODE FUNCTIONS BY ASSOCIATING TEST RESULTS AND HASH VALUE OF FUNCTION SOURCE CODE**
VERFAHREN UND SYSTEM ZUM TESTEN VON QUELLCODE-FUNKTIONEN DURCH VERBINDUNG VON TESTERGEBNISSEN UND HASH-WERT DER FUNKTIONQUELLCODE
PROCEDE ET SYSTEME DE TEST DU CODE SOURCE DES FONCTIONS EN ASSOCIANT LES RESULTATS DE TEST ET LA VALEUR DE HACHAGE D'UN CODE SOURCE DES FONCTIONS

(30) Priority: 02.04.2019 GB 201904616
(43) Date of publication of application: 07.10.2020
(73) Proprietor: Cambridge Spark Limited, Cambridge, Cambridgeshire CB1 2LA (GB)
(72) Inventor: ILLES, Guy Tamas, Cambridge, Cambridgeshire CB1 2LA (GB); LEMAGNEN, Kevin, Cambridge, Cambridgeshire CB1 2LA (GB); URMA, Raoul-Gabriel, Cambridge, Cambridgeshire CB1 2LA (GB)
(74) Representative: Appleyard Lees IP LLP

(56) References cited:
- WO-A1-2018/029668
- US-A1- 2018 060 224

## Description

### Field

The present techniques relate to a method and system for testing software, for example automated testing of variants of the software.

### Background

Testing is part of the software development process. WO2018029668 discloses a system and method for CI/CT/CD, which is continuous integration/continuous testing/continuous delivery, in which testing is fully integrated to the needs of rapid code development and delivery. The system is determining test coverage of a plurality of tests, comprising a code builder for providing code, a code tester for testing the code with said plurality of tests, and a code test analyzer for analyzing results of said plurality of tests to determine coverage of said code by said plurality of tests. The applicant has recognised the need for an efficient technique for computerised system testing which is able to automate testing of variants of software code.

### Summary

According to the present invention there is provided an apparatus and method as set forth in the appended claims. Other features of the invention will be apparent from the dependent claims, and the description which follows.

We describe a method for performing testing on source code according to claim 6. We also describe an apparatus, e.g. an evaluation server, for performing testing on source code. For example, we describe an evaluation server for performing testing on source code according to claim 1.

The various modules may be stand-alone components or may be provided by a single processor. Thus, for example, the evaluation server comprises a processor which is configured to receive a file comprising source code for performing a plurality of functions; separate the source code into a plurality of source code components wherein each source code component performs an individual function within the plurality of functions.

Calculating (or obtaining) a hash is used because it generates a unique result of fixed length for each function which may be expressed in differing lengths of source code. Typically, a hash value will be shorter that the source code component and thus hashing may be considered to compress the data. Once a hash value has been calculated, it is not possible to recreate the original data used to calculate the hash value. Furthermore, any change to the source code component on which the hash is based will change the result of the hash. It will be appreciated that a function which achieves the same results, e.g. a unique and encrypted result of fixed length that tracks changes in the source code component, could be used instead of hashing.

Each source code component is processed before calculating the hash value and this processing may be termed pre-processing. For example, unwanted text, e.g. comments, may be removed from the source code component. This processing step may be termed "cleaning" and may be done using any suitable technique, e.g. a library may be used to parse the relevant information from each source code component. After this step, only the relevant executable code in the source code component for each function may be retained. The processing may be done by the processing module or processor.

Processing the source code component comprises identifying any dependent functions within the source code component. Such dependent functions include helper functions. A helper function is a function that performs part of the computation of another function but is not a function of interest when testing the software. For example, the helper function may be a standard source code component from known packages or other sources. The cleaning step is also performed on helper functions.

At least the testing and calculating steps are done in parallel. The pre-processing steps may be performed before the calculating steps and may also be performed in parallel with the testing step. This may result in a more stream-lined and efficient process.

Testing the source code component comprises generating a test result which is indicative of a pass or fail. For example, a zero may be awarded for a fail and a one for a pass. As defined above, each source code component performs an individual function from the plurality of functions within the complete file and thus the test result for each source code component is a test for each function. Multiple tests may be run on each source code component and the test result for each test may be summed to an overall test result for the source code component. Similarly, the test results for each source code component within the file may be summed to give an overall test result for the file where the overall test result represents the test results for the plurality of functions within the file.

A plurality of files each comprising source code for a plurality of functions may be received. Each of the steps which are described above may be carried out for each received file. For example, the separating, testing, calculating and associating steps may be repeated for each file in the plurality of files. Similarly, the processing (or pre-processing) may be carried out for each file. A plurality of files may be received from a single user device. Alternatively, at least one file may be received from a plurality of user devices and thus in some instances, a plurality of files may be received from each of a plurality of user devices.

The evaluation server may further comprise an evaluation module. A function may be identified, e.g. using the evaluation module, which is common to multiple files, for example, by using the name of each function in the source code. Hash values for each identified function may be compared to determine whether each identified function is identical. By separating the source code into separate functions, it is thus possible to compare parts from different files. Thus, more data about a particular function may be obtained. The number of different hash values for each identified function may be counted. For example, the number of different hash values, e.g. the number of different source code components, for each identified function may be counted to determine how many attempts were made before the correct (or final) source code component was written. The number of attempts may be considered to be indicative of the difficulty of the task of preparing that particular source code component. The test results may be provided as feedback to the user device so that a user is informed that the source code component is correct and does not need to be altered further.

We also describe a non-transitory computer readable medium comprising program code which when executed by a processor causes the processor to carry out the steps described above.

### Brief description of drawings

For a better understanding of the invention, and to show how embodiments of the same may be carried into effect, reference will now be made, by way of example only, to the accompanying diagrammatic drawings in which:
Figure 1 is a schematic block diagram of a system for testing software; and
Figure 2 is a flow chart of the method for testing software.

Although a few preferred embodiments of the present invention have been shown and described, it will be appreciated by those skilled in the art that various changes and modifications might be made without departing from the scope of the invention, as defined in the appended claims

### Detailed description of drawings

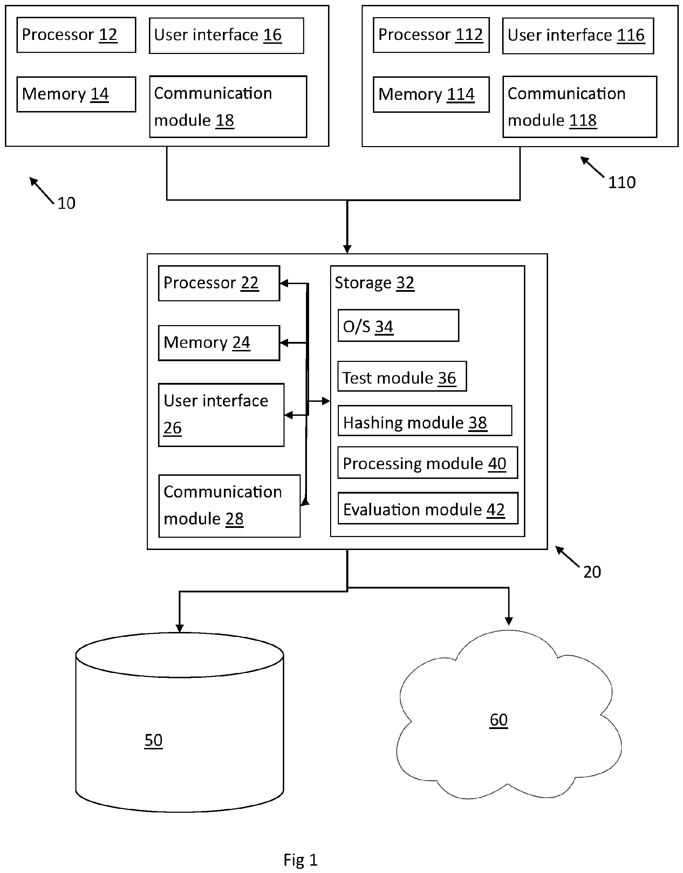

Figure 1 shows a schematic block diagram for a system of testing software. The software being tested may written in any language, e.g. Python, Java, Javascript, R, C, C++, C#, Ruby, Visual Basic, NET, Perl or PHP. A plurality of user devices 10, 110 is connected to an evaluation server 20. In this example, two user devices 10, 110 are depicted but it will be appreciated that this is merely illustrative and any number of devices can be connected. A user device 10, 110 may be any typical electronic device which can be used for preparing software, e.g. a personal computer, a tablet, a smartphone or another computer system. The user of the device may be a software developer or in an educational setting, may be a student.

The user device 10, 110 may comprise the standard components of such a computing device, for example a processor 12, 112 (e.g. a processing device), memory 14, 114, a user interface 16, 116 and a communication module 18, 118. It will be appreciated that these are merely illustrative and other components may be included. The user interface 16, 116 may include any suitable input, e.g. a keyboard, voice input, to allow a user to prepare software for testing and may also include a display, e.g. audio and/or visual, to show the results of the testing on the software. The memory 14, 114 may comprise volatile and non-volatile memory and may comprise some or all of read-only memory (ROM), flash memory, dynamic random access memory (DRAM), a static memory. The communication module 18, 118 is used to connect the user devices to the evaluation server 20 and any suitable connection may be used, e.g. via WiFi, the internet and/or other network connections.

The evaluation server 20 is shown as a single device but it will be appreciated that the functionality can be split over several devices, if required. The evaluation server 20 may be any suitable device which processes the received software as described below. As for the user devices, the evaluation server 20 may comprise the standard components of such a computing device, for example a processor 22, memory 24, a user interface 26, and a communication module 28. These components may be as described above in relation to the user devices.

The evaluation server 20 also comprises storage 32 in which a plurality of modules may be stored and loaded as needed. For example, there is an operating system 34 together with a hashing module 38 for performing the hashing functionality described below, a test module 36 for testing the received files, a processing module 40 for performing the pre-processing functionality described below and an evaluation module 42 for performing the evaluation of the software as described below. It will be appreciated that although these are shown as separate modules, the functionality may be combined into fewer modules.

The storage within the evaluation server 20 may store the results from the various modules. Alternatively, the results may be stored in a separate database 50 or may be stored in the cloud 60 (or similar data storage). Further processing may be performed on the stored data.

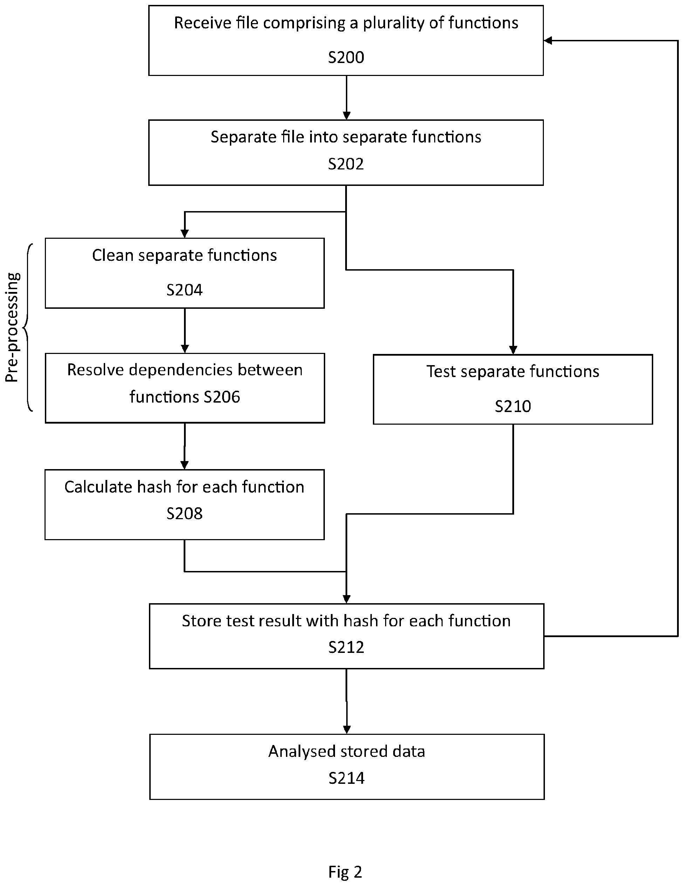

Figure 2 is a flowchart of the method which may be implemented on the system above. In a first step S200, the evaluation server receives from one of the plurality of electronic devices a file, e.g. a source code file, which comprises a plurality of functions. Each function is an operation, procedure or routine some of which may generate a result. Each function is implemented by a section (or component) of the source code. A simple example "toy.py" is shown below. This is a software program written in python which comprises source code components for three functions: func1 which is doing some addition, func2 which is a recursive function and a helper function. As explained below, func1 and func2 are to be evaluated:

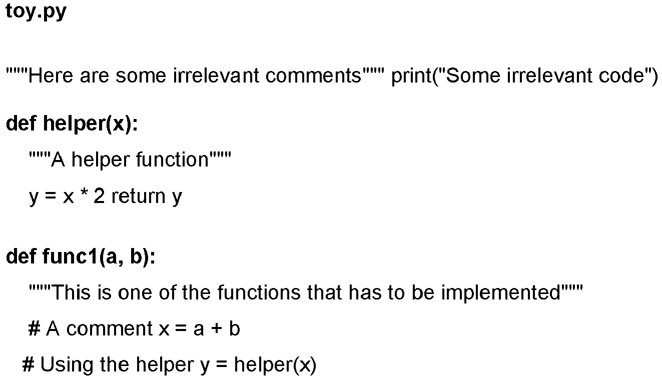

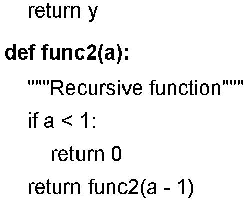

The next step S202 is to separate the received file into a plurality of separate functions and in particular to identify the functions which are to be evaluated (e.g. func1 and func2 in the example above). These separate functions which are to be evaluated may be termed unique functions. The separation of the file may be done using suitable techniques, for example if the source code file is in Python, the module "Python AST" may be used to isolate the unique functions in each file. It will be appreciated that equivalent modules may be used for other languages.

Once the functions have been isolated, there are two processing streams which are applied to each of the separated functions. These streams are applied in parallel. In one stream, there may be an initial pre-processing of the separate functions and this processing may be carried out using the processing module described above. One step in the pre-processing is to "clean" the functions (step S204) and the term "clean" is used to indicate that only the relevant executable code in each function is retained. In other words, comments included by the user who wrote the function are discounted. The cleaned data contains a description of the logic of the function. Such cleaned code may be termed a footprint for the function. The cleaning is applied to the function itself and any of its dependent functions (i.e. helper functions). The cleaning is done using any suitable technique, e.g. a library may be used to parse the relevant information from each function. For example, using the example above, the "clean" versions of the functions are shown below and as shown func1 includes the dependent function - helper and func2 does not follow the recursion but simply says that we return func2:

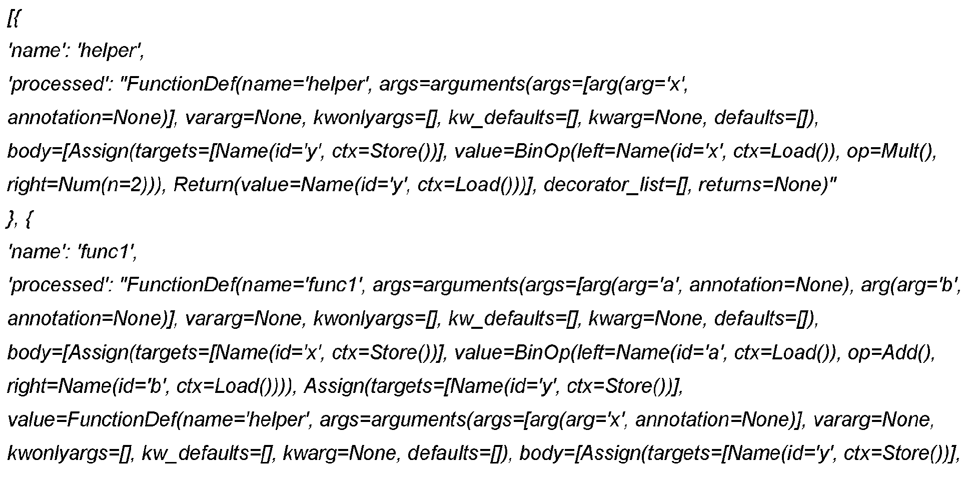

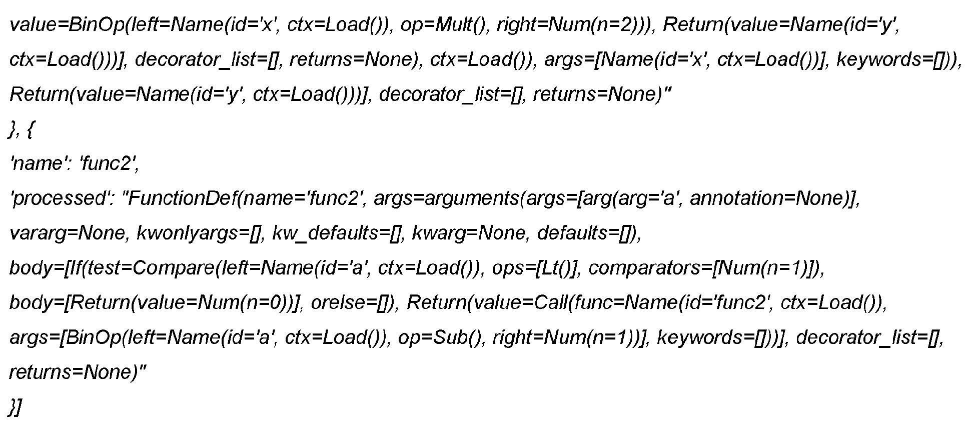

Another step in the pre-processing phase is to resolve dependencies between functions (step S206) so that the separate functions can be individually evaluated. It will be appreciated that this step may be done before the cleaning step. A dependency between functions means that one function cannot be implemented until the function on which it is dependent has been implemented. A function may be dependent on more than one other function and may also be dependent on itself (i.e. a recursive function). Furthermore, there may be multiple layers of dependency, e.g. a function may be dependent on a function which is itself dependent on another function and so on. A function which is dependent on itself may be resolved by inspecting its own components and keeping the function as a dependency without adding its own components back for pre-processing again. For example, say a function f1 calls itself, the method (or algorithm) may start by considering the outer components of f1, before searching for the functions (or components) used within f1 which will be f1 because the function is dependent on itself. If the dependency is not resolved, the algorithm would again look up f1, check its dependencies, add f1 again and repeat indefinitely. Thus, the pre-processing phase is such that the method stops searching for dependencies after it finds that f1 calls itself.

Functions may also be dependent on helper functions. Helper functions are functions which are not of interest when testing the software but are called by the functions which are of interest when testing the software. In other words, a helper function is a function that performs part of the computation of another function. Such helper functions may be written by a user but may also be imported from other packages or other sources. Using the example above, the functions which we are interested in testing are func1 and func2 and func1 calls on a helper function. Although the helper function is listed above, it is discarded as a separate function and only retained in the context of fund. The dependencies are followed up to a stopping condition, for example, to keep only other functions defined in the same file. However, it will be appreciated that other stopping conditions may be used, e.g. to keep functions defined in the same package (folder), or defined in the current Python path. A stopping condition is generally needed to control the resolution of dependencies, otherwise the resolution could be indefinite.

The final illustrated step in this stream is to calculate a hash value (also termed hash code) for each function (step S208). Although the table below shows a separate hash value for the helper function because a hash may only be calculated for the functions of interest, e.g. at least func1 and func2 in the example given. The hash value for a function which calls on a helper function (e.g. fund) will be computed using the helper function(s) together with other elements of the function. Any standard hashing technique may be used, e.g. MD5 message-digest-algorithm. A hash function maps data of an arbitrary size (e.g. the cleaned function as shown above) to data of a fixed size (e.g. 32 characters or so). The hashing process is used because it generates a unique result for each function. Any change to the data within the function will change the result of the hash. It will be appreciated that a function which achieves the same result, e.g. a unique result of fixed length, could be used instead of hashing. Using the example above, the hashes for each of the cleaned functions are shown below:

| Function | Hash value |
|---|---|
| Helper | 07b606e6c19a3070ce17aed8d3cee9c9 |
| Func1 | b0b76e4cdbfcbcd0b92157da114a241c |
| Func2 | 585e58f5a2f38cf39b5a28de4db13946 |

The other stream which runs in parallel with the pre-processing and hashing stream may be termed an evaluation stream. This may result in a more streamlined and efficient process. There is a step S210 of testing each separate, unique function. One or more tests is run against each separate function to check their correctness. These test(s) may run automatically, e.g. using the test module. Each test may result in a pass or fail. A test result may be output. The test result may be an overall score which may be generated based on the number of tests which pass or fail or alternatively, the test result may be given a fail if any one of the tests fail.

The output from each stream is then collated, e.g. by the processing module. The test result for each function is associated with the hash code which has been generated for each function. The associated test result and hash code are stored (step S212). Both the pre-processing and hashing allow for memory efficient storage because the full source code is not stored. However, as explained below, enough information is retained to allow further testing and correction of the source file.

The method may then loop back to the beginning to repeat the process for other received files. It will be appreciated that multiple files may be processed simultaneously. Multiple files may be received from the same user and/or one or more files may be received from multiple different users. Each file is an independent submission to the evaluation server.

The stored data may optionally be analysed (step S214) using the evaluation module. For example, the test results for each function may be summed to give an overall score for the original input file. Each user may submit multiple versions of the same source file, e.g. with corrections and/or amendments to some or all of the functions. One useful further analysis for different files submitted by the same user is to track whether or not each individual function has been changed. This can be done easily by comparing the hash values associated with each function in each file. When an individual (i.e. separate) function is submitted with exactly the same footprint in more than one file, the calculated hash value will be the same. For example, the hash value in the table above will be the same for each of func1, func2 or helper if nothing substantive in the code for these functions is changed. By contrast, any change to the footprint, even a relatively small syntax change, will result in a different hash value. This may be useful to determine how many changes are required before a user generates a correct function, e.g. a function that passes all the test(s). Calculating the number of attempts may be done by counting the number of times the compared hash values for each function do not match. Once the hash values match, it is likely that the user has received feedback that the test result(s) are successful and thus has not made any further changes to the code.

It will be appreciated that the method and system described above are useful for developing software in an efficient and informative manner. The software developer is provided with feedback regarding the individual functions within the software and thus can avoid updating a function which has successfully passed a test. As explained above, the hash value allows the testing system to identify easily which functions have been changed and thus testing of the unchanged functions is avoided.

The further analysis could be useful in an educational setting wherein the users may be students. For example, a plurality of users may be set the same series of exercises which result in the generation of a file with a particular set of functions. Each function may implement one exercise. The method described above aims to simulate a real-world data science or software development context and thus calculating the number of attempts is important. The method thus allows a comparison of the number of attempts which are required by different users for each separate function. For each of the files from the multiple users, a distribution of the number of attempts for all users and for all functions may be obtained. An indication of the difficulty of each separate function may be obtained from the distribution, e.g. by using the median number of attempts as an indicator of difficulty. A ranking of the different users may also be obtained based on the number of attempts by the users to correctly write all the functions and/or based on their individual combined scores for the test result for each file.

By separating the file into the separate functions, it is possible to track performance for each function regardless of whether the same functions are present in each file. In other words, new functions can be added into different files but the overlapping functions (i.e. those functions which are present in more than one file) can still be compared. It will be appreciated that this has general utility in testing and development of software. Moreover, in an educational context, this means that the series of exercise can be changed, e.g. to remove the need for a particular function but to insert another function, and it is not necessary to restart the comparison process or rebuilding the testing system. Each function is independently stored, in an efficient manner by using the hash values, and can be easily compared with different versions of the same function, if desired. The system can thus be adapted dynamically to increase or decrease the difficulty of the series of exercises by removing or adding individual exercises.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. The processor (or processing device) may be an FGPA, an ASIC or general-purpose processing device such as a microprocessor, central processing unit, a complex instruction set computing microprocessor (CISC), reduced instruction set computing microprocessor (RISC), very long instruction word microprocessor (VLIW) or another processing unit. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

All of the features disclosed in this specification (including any accompanying claims, abstract and drawings), and/or all of the steps of any method or process so disclosed, may be combined in any combination, except combinations where at least some of such features and/or steps are mutually exclusive.

Attention is directed to all papers and documents which are filed concurrently with or previous to this specification in connection with this application and which are open to public inspection with this specification, and the contents of all such papers and documents are incorporated herein by reference.

The invention is not restricted to the details of the foregoing embodiment(s). The invention is defined by the appended independent claims 1 and 6.

## Claims

1. An evaluation server (20) for performing testing on source code, the evaluation server (20) comprising
a processing module (40) configured to
receive, from a user device (10, 110), a file comprising source code for performing a plurality of functions; wherein the file is an independent submission to the evaluation server (20);
separate the source code into a plurality of source code components, wherein each source code component performs an individual function within the plurality of functions;
resolve dependencies between the plurality of source code components until a stopping condition is met;
identify when the source code component is dependent on any helper function by using a library to parse the relevant information from each source code component; wherein the helper function is a function that performs part of a computation of another function and is written by a user of the user device (10,110) or imported from other packages or other sources; and
discard the helper function as a separate source code component so that the helper function is not individually tested during a software test but retain the helper function in a context of the individual function by including the code of the helper function in the code of the individual function;
a testing module (36) configured to test each source code component to generate a test result for each individual function;
a hashing module (38) configured to calculate a hash value for each individual function by hashing the source code component for the individual function; wherein to calculate the hash value for each individual function which calls on the helper function, the hashing module (38) calculates the hash value using the helper function together with other elements of each individual function which calls on the helper function; and
storage (32) for storing a test result with an associated calculated hash value for each individual function;
wherein at least the testing module (36) and the hashing module (38) are configured to test and calculate in parallel; and
wherein the hash value of each individual function is used to identify whether the individual function has changed and testing of unchanged individual functions is avoided.

2. The evaluation server of claim 1, wherein the processing module (40) is further configured to remove any unwanted text from each source code component before the source code component is received by the hashing module (38).

3. The evaluation server of any one of claims 1 to 2, wherein the processing module (40) is configured to receive a plurality of files each comprising source code for a plurality of functions and the storage (32) is configured to store a test result with an associated calculated hash value for each individual function in the plurality of files.

4. The evaluation server of claim 3, further comprising an evaluation module (42) which is configured to
identify a function which is common to multiple files and
compare the hash values for each identified function to determine whether each identified function is identical.

5. The evaluation server of claim 4, wherein the evaluation module (42) is configured to count the number of different hash values for each identified function.

6. A method for performing testing on source code on an evaluation server (20), the method comprising:
receiving, in the evaluation server (20) from a user device (10, 110) a file comprising source code for performing a plurality of functions; wherein the file is an independent submission to the evaluation server (20);
separating, by the evaluation server (20), the source code into a plurality of source code components, wherein each source code component performs an individual function within the plurality of functions;
resolving dependencies, by the evaluation server (20), between the plurality of source code components until a stopping condition is met;
identifying when the source code component is dependent on any helper function by using a library to parse the relevant information from each source code component; wherein the helper function is a function that performs part of a computation of another function and is written by a user of the user device (10,110) or imported from other packages or other sources;
discarding the helper function as a separate source code component so that the helper function is not individually tested during a software test but retaining the helper function in a context of the individual function by including the code of the helper function in the code of the individual function;
testing, by the evaluation server (20), each source code component to generate a test result for each individual function;
calculating, by the evaluation server (20), a hash value for each individual function by hashing the source code component for the individual function; wherein the hash value for each individual function which calls on the helper function is calculated by using the helper function together with other elements of each individual function which calls on the helper function;
associating, by the evaluation server (20), the test result for each individual function with the calculated hash value;
storing the associated test result for each individual function with the calculated hash value;
wherein at least the testing and calculating steps are done in parallel; and
wherein the hash value of each individual function is used to identify whether the individual function has changed and testing of unchanged individual functions is avoided.

7. The method of claim 6, further comprising:
removing any unwanted text from each source code component before calculating the hash value.

8. The method of any one of claims 6 to 7, comprising receiving a plurality of files each comprising source code for a plurality of functions and repeating the separating, testing, calculating and associating steps for each file in the plurality of files.

9. The method of claim 8, comprising receiving a plurality of files from a user device and/or receiving at least one file from a plurality of user devices.

10. The method of any one of claims 8 to 9, further comprising
identifying a function which is common to multiple files, and
comparing the hash values for each identified function to determine whether each identified function is identical.

11. A non-transitory computer readable medium comprising program code which when executed by a processor causes the processor to carry out the method of any one of claims 6 to 10.

## Patentansprüche

1. Auswertungsserver (20) zum Ausführen von Testen von Quellcode, wobei der Auswertungsserver (20) Folgendes umfasst:
ein Verarbeitungsmodul (40), das konfiguriert ist zum
Empfangen von einer Anwendervorrichtung (10, 110) einer Datei, die Quellcode zum Ausführen mehrerer Funktionen umfasst; wobei die Datei eine unabhängige Übermittlung zu dem Auswertungsserver (20) ist;
Aufteilen des Quellcodes in mehrere Quellcodekomponenten, wobei jede Quellcodekomponente eine individuelle Funktion innerhalb der mehreren Funktionen ausführt;
Auflösen von Abhängigkeiten zwischen den mehreren Quellcodekomponenten, bis eine Anhaltebedingung erfüllt ist;
Identifizieren, wenn die Quellcodekomponente von irgendeiner Hilfsfunktion abhängt, unter Verwendung einer Bibliothek, um die relevanten Informationen aus jeder Quellcodekomponente zu analysieren; wobei die Hilfsfunktion eine Funktion ist, die einen Teil einer Berechnung einer weiteren Funktion ausführt und durch einen Anwender der Anwendervorrichtung (10, 110) geschrieben ist oder aus anderen Paketen oder anderen Quellen importiert ist; und
Verwerfen der Hilfsfunktion als eine separate Quellcodekomponente, so dass die Hilfsfunktion während eines Softwaretests nicht individuell getestet wird, jedoch Beibehalten der Hilfsfunktion in einem Kontext der individuellen Funktion durch Aufnehmen des Codes der Hilfsfunktion in den Code der individuellen Funktion;
ein Testmodul (36), das konfiguriert ist, jede Quellcodekomponente zu testen, um ein Testergebnis für jede individuelle Funktion zu erzeugen;
ein Hash-Modul (38), das konfiguriert ist, einen Hash-Wert für jede individuelle Funktion durch Hashing der Quellcodekomponente für die individuelle Funktion zu berechnen; wobei das Hash-Modul (38), um den Hash-Wert für jede individuelle Funktion, die die Hilfsfunktion aufruft, zu berechnen, den Hash-Wert unter Verwendung der Hilfsfunktion zusammen mit anderen Elementen jeder individuellen Funktion, die die Hilfsfunktion aufruft, berechnet; und
einen Speicher (32) zum Speichern eines Testergebnisses mit einem zugeordneten berechneten Hash-Wert für jede individuelle Funktion;
wobei wenigstens das Testmodul (36) und das Hash-Modul (38) konfiguriert sind, parallel zu testen und zu berechnen; und
wobei der Hash-Wert jeder individuellen Funktion verwendet wird, um zu identifizieren, ob sich die individuelle Funktion geändert hat, und Testen unveränderter individueller Funktionen vermieden wird.

2. Auswertungsserver nach Anspruch 1, wobei das Verarbeitungsmodul (40) ferner konfiguriert ist, irgendeinen unerwünschten Text aus jeder Quellcodekomponente zu entfernen, bevor die Quellcodekomponente von dem Hash-Modul (38) empfangen wird.

3. Auswertungsserver nach einem der Ansprüche 1 bis 2, wobei das Verarbeitungsmodul (40) konfiguriert ist, mehrere Dateien, von denen jede Quellcode für mehrere Funktionen umfasst, zu empfangen, und der Speicher (32) konfiguriert ist, ein Testergebnis mit einem zugeordneten berechneten Hash-Wert für jede individuelle Funktion in den mehreren Dateien zu speichern.

4. Auswertungsserver nach Anspruch 3, der ferner ein Auswertungsmodul (42) umfasst, das konfiguriert ist zum
Identifizieren einer Funktion, die mehreren Dateien gemeinsam ist, und
Vergleichen der Hash-Werte für jede identifizierte Funktion, um zu bestimmen, ob jede identifizierte Funktion identisch ist.

5. Auswertungsserver nach Anspruch 4, wobei das Auswertungsmodul (42) konfiguriert ist, die Anzahl unterschiedlicher Hash-Werte für jede identifizierte Funktion zu zählen.

6. Verfahren zum Ausführen von Testen von Quellcode auf einem Auswertungsserver (20), wobei das Verfahren Folgendes umfasst:
Empfangen in dem Auswertungsserver (20) von einer Anwendervorrichtung (10, 110) einer Datei, die Quellcode zum Ausführen mehrerer Funktionen umfasst; wobei die Datei eine unabhängige Übermittlung zu dem Auswertungsserver (20) ist;
Aufteilen durch den Auswertungsserver (20) des Quellcodes in mehrere Quellcodekomponenten, wobei jede Quellcodekomponente eine individuelle Funktion innerhalb der mehreren Funktionen ausführt;
Auflösen von Abhängigkeiten durch den Auswertungsserver (20) zwischen den mehreren Quellcodekomponenten, bis eine Anhaltebedingung erfüllt ist;
Identifizieren, wenn die Quellcodekomponente von irgendeiner Hilfsfunktion abhängt, unter Verwendung einer Bibliothek, um die relevanten Informationen aus jeder Quellcodekomponente zu analysieren; wobei die Hilfsfunktion eine Funktion ist, die einen Teil einer Berechnung einer weiteren Funktion ausführt und durch einen Anwender der Anwendervorrichtung (10, 110) geschrieben ist oder aus anderen Paketen oder anderen Quellen importiert ist;
Verwerfen der Hilfsfunktion als eine separate Quellcodekomponente, so dass die Hilfsfunktion während eines Softwaretests nicht individuell getestet wird, jedoch Beibehalten der Hilfsfunktion in einem Kontext der individuellen Funktion durch Aufnehmen des Codes der Hilfsfunktion in den Code der individuellen Funktion;
Testen durch den Auswertungsserver (20) jeder Quellcodekomponente, um ein Testergebnis für jede individuelle Funktion zu erzeugen;
Berechnen durch den Auswertungsserver (20) eines Hash-Werts für jede individuelle Funktion durch Hashing der Quellcodekomponente für die individuelle Funktion; wobei der Hash-Wert für jede individuelle Funktion, die die Hilfsfunktion aufruft, unter Verwendung der Hilfsfunktion zusammen mit anderen Elementen jeder individuellen Funktion, die die die Hilfsfunktion aufruft, berechnet wird;
Zuordnen durch den Auswertungsserver (20) des Testergebnisses für jede individuelle Funktion zu dem berechneten Hash-Wert;
Speichern des zugeordneten Testergebnisses für jede individuelle Funktion mit dem berechneten Hash-Wert;
wobei wenigstens die Test- und Berechnungsschritte parallel vorgenommen werden; und
wobei der Hash-Wert jeder individuellen Funktion verwendet wird, um zu identifizieren, ob sich die individuelle Funktion geändert hat, und Testen unveränderter individueller Funktionen vermieden wird.

7. Verfahren nach Anspruch 6, das ferner Folgendes umfasst:
Entfernen irgendeines unerwünschten Texts aus jeder Quellcodekomponente vor dem Berechnen des Hash-Werts.

8. Verfahren nach einem der Ansprüche 6 bis 7, das das Empfangen mehrerer Dateien, von denen jede Quellcode für mehrere Funktionen umfasst, und Wiederholen der Aufteilungs-, Test-, Berechnungs- und Zuordnungs-Schritte für jede Datei in den mehreren Dateien umfasst.

9. Verfahren nach Anspruch 8, das das Empfangen mehrerer Dateien von einer Anwendervorrichtung und/oder Empfangen wenigstens einer Datei von mehreren Anwendervorrichtungen umfasst.

10. Verfahren nach einem der Ansprüche 8 bis 9, das ferner Folgendes umfasst:
Identifizieren einer Funktion, die mehreren Dateien gemeinsam ist, und
Vergleichen der Hash-Werte für jede identifizierte Funktion, um zu bestimmen, ob jede identifizierte Funktion identisch ist.

11. Nicht-transitorisches computerlesbar Medium, das Programmcode umfasst, der dann, wenn er durch einen Prozessor ausgeführt wird, den Prozessor veranlasst, das Verfahren nach einem der Ansprüche 6 bis 10 auszuführen.

## Revendications

1. Serveur d'évaluation (20) pour effectuer des tests sur un code source, le serveur d'évaluation (20) comprenant :
un module de traitement (40) configuré pour :
recevoir, depuis un dispositif utilisateur (10, 110), un fichier comprenant un code source pour exécuter une pluralité de fonctions ; où le fichier est une soumission indépendante au serveur d'évaluation (20) ;
séparer le code source en une pluralité de composants de code source, où chaque composant de code source exécute une fonction individuelle dans la pluralité de fonctions ;
résoudre les dépendances entre la pluralité de composants de code source jusqu'à ce qu'une condition d'arrêt soit satisfaite ;
identifier quand le composant de code source dépend d'une fonction d'aide quelconque en utilisant une bibliothèque pour analyser les informations pertinentes de chaque composant de code source ; où la fonction d'aide est une fonction qui effectue une partie d'un calcul d'une autre fonction et est écrite par un utilisateur du dispositif utilisateur (10, 110) ou importée d'autres paquets ou d'autres sources ; et
éliminer la fonction d'aide en tant que composant de code source séparé de sorte que la fonction d'aide ne soit pas testée individuellement pendant un test de logiciel, mais conserver la fonction d'aide dans un contexte de la fonction individuelle en incluant le code de la fonction d'aide dans le code de la fonction individuelle ;
un module de test (36) configuré pour tester chaque composant de code source afin de générer un résultat de test pour chaque fonction individuelle ;
un module de hachage (38) configuré pour calculer une valeur de hachage pour chaque fonction individuelle en hachant le composant de code source pour la fonction individuelle ; où, pour calculer la valeur de hachage pour chaque fonction individuelle qui fait appel à la fonction d'aide, le module de hachage (38) calcule la valeur de hachage en utilisant la fonction d'aide conjointement avec d'autres éléments de chaque fonction individuelle qui fait appel à la fonction d'aide ; et
une mémoire (32) pour stocker un résultat de test avec une valeur de hachage calculée associée pour chaque fonction individuelle ;
où au moins le module de test (36) et le module de hachage (38) sont configurés pour tester et calculer en parallèle ; et
où la valeur de hachage de chaque fonction individuelle est utilisée pour identifier si la fonction individuelle a changé, et le test des fonctions individuelles inchangées est évité.

2. Serveur d'évaluation selon la revendication 1, dans lequel le module de traitement (40) est en outre configuré pour supprimer tout texte indésirable de chaque composant de code source avant que le composant de code source ne soit reçu par le module de hachage (38).

3. Serveur d'évaluation selon l'une quelconque des revendications 1 et 2, dans lequel le module de traitement (40) est configuré pour recevoir une pluralité de fichiers comprenant chacun un code source pour une pluralité de fonctions, et la mémoire (32) est configurée pour stocker un résultat de test avec une valeur de hachage calculée associée pour chaque fonction individuelle dans la pluralité de fichiers.

4. Serveur d'évaluation selon la revendication 3, comprenant en outre un module d'évaluation (42) qui est configuré pour identifier une fonction qui est commune à plusieurs fichiers et comparer les valeurs de hachage pour chaque fonction identifiée afin de déterminer si chaque fonction identifiée est identique.

5. Serveur d'évaluation selon la revendication 4, dans lequel le module d'évaluation (42) est configuré pour compter le nombre de valeurs de hachage différentes pour chaque fonction identifiée.

6. Procédé pour effectuer des tests sur un code source sur un serveur d'évaluation (20), le procédé comprenant les étapes suivantes :
recevoir, dans le serveur d'évaluation (20), depuis un dispositif utilisateur (10, 110), un fichier comprenant un code source pour exécuter une pluralité de fonctions ; où le fichier est une soumission indépendante au serveur d'évaluation (20) ;
séparer, par le serveur d'évaluation (20), le code source en une pluralité de composants de code source, où chaque composant de code source exécute une fonction individuelle dans la pluralité de fonctions ;
résoudre les dépendances, par le serveur d'évaluation (20), entre la pluralité de composants de code source jusqu'à ce qu'une condition d'arrêt soit satisfaite ;
identifier quand le composant de code source dépend d'une fonction d'aide quelconque en utilisant une bibliothèque pour analyser les informations pertinentes de chaque composant de code source ; où la fonction d'aide est une fonction qui effectue une partie d'un calcul d'une autre fonction et est écrite par un utilisateur du dispositif utilisateur (10, 110) ou importée d'autres paquets ou d'autres sources ;
éliminer la fonction d'aide en tant que composant de code source séparé de sorte que la fonction d'aide ne soit pas testée individuellement pendant un test de logiciel, mais conserver la fonction d'aide dans un contexte de la fonction individuelle en incluant le code de la fonction d'aide dans le code de la fonction individuelle ;
tester, par le serveur d'évaluation (20), chaque composant de code source pour générer un résultat de test pour chaque fonction individuelle ;
calculer, par le serveur d'évaluation (20), une valeur de hachage pour chaque fonction individuelle en hachant le composant de code source pour la fonction individuelle ; où la valeur de hachage pour chaque fonction individuelle qui fait appel à la fonction d'aide est calculée en utilisant la fonction d'aide conjointement avec d'autres éléments de chaque fonction individuelle qui fait appel à la fonction d'aide ;
associer, par le serveur d'évaluation (20), le résultat du test pour chaque fonction individuelle avec la valeur de hachage calculée ;
stocker le résultat de test associé pour chaque fonction individuelle avec la valeur de hachage calculée ;
où au moins les étapes de test et de calcul sont effectuées en parallèle ; et
où la valeur de hachage de chaque fonction individuelle est utilisée pour identifier si la fonction individuelle a changé, et le test des fonctions individuelles inchangées est évité.

7. Procédé selon la revendication 6, comprenant en outre l'étape suivante :
supprimer tout texte indésirable de chaque composant de code source avant de calculer la valeur de hachage.

8. Procédé selon l'une quelconque des revendications 6 à 7, comprenant de recevoir une pluralité de fichiers comprenant chacun un code source pour une pluralité de fonctions, et de répéter les étapes de séparation, de test, de calcul et d'association pour chaque fichier de la pluralité de fichiers.

9. Procédé selon la revendication 8, comprenant de recevoir une pluralité de fichiers depuis un dispositif utilisateur et/ou de recevoir au moins un fichier depuis une pluralité de dispositifs utilisateurs.

10. Procédé selon l'une quelconque des revendications 8 à 9, comprenant en outre les étapes suivantes :
identifier une fonction qui est commune à plusieurs fichiers, et
comparer les valeurs de hachage pour chaque fonction identifiée afin de déterminer si chaque fonction identifiée est identique.

11. Support non transitoire lisible par ordinateur comprenant un code de programme qui, lorsqu'il est exécuté par un processeur, amène le processeur à exécuter le procédé de l'une quelconque des revendications 6 à 10.
